Europäisches Patentamt

European Patent Office

Office européen des brevets

(19)

(11) Publication number: **0 084 129**
**B1**

(12) **EUROPEAN PATENT SPECIFICATION**

(45) Date of publication of patent specification: **02.07.86**

(51) Int. Cl.⁴: **G 21 C 3/62, C 01 G 43/025**

(21) Application number: **82111635.7**

(22) Date of filing: **15.12.82**

(54) Method for treating nuclear fuel scrap.

(30) Priority: **19.01.82 US 340593**

(43) Date of publication of application:
**27.07.83 Bulletin 83/30**

(45) Publication of the grant of the patent:
**02.07.86 Bulletin 86/27**

(84) Designated Contracting States:
**BE CH DE FR GB IT LI SE**

(56) References cited:
**DE-A-1 812 414**
**DE-A-2 004 967**
**FR-A-1 315 822**
**FR-A-2 001 113**
**US-A-3 343 926**

(73) Proprietor: **WESTINGHOUSE ELECTRIC CORPORATION**
**Westinghouse Building Gateway Center**
**Pittsburgh Pennsylvania 15222 (US)**

(72) Inventor: **Shuck, David LeRoy**
**1106 12th Street**
**Golden Colorado (US)**
Inventor: **Lyon, Ward Lewis**
**P.O. Box 252**
**Madison, Pennsylvania 15663 (US)**
Inventor: **Wu, Christopher Kuo-chieh**
**421 Woodland Hills Drive**
**Pittsburgh Pennsylvania (US)**

(74) Representative: **Holzer, Rupprecht, Dipl.-Ing.**
**Philippine-Welser-Strasse 14**
**D-8900 Augsburg (DE)**

## Description

Scrap from nuclear fuel fabrication is normally uncontrollably oxidized to $U_3O_8$ by burning or roasting at about 500°C in a boat placed in a furnace with an air atmosphere. Due to the highly exothermic nature of the oxidation reaction, the scrap in the boat may actually reach a temperature of 800 to 900°C or even greater. The $U_3O_8$ so produced is usually "dead burnt" which means that because of its low surface area it cannot be sintered. As a result, the amount which can be directly recycled into fresh $UO_2$ powder is very low since the use of larger amounts would prevent the fuel pellet from reaching the high density required for fuel specifications.

This problem is common to the fabrication of either uranium oxide fuel or to mixed oxide $UO_2$—$PuO_2$ fuel. When mixed oxide scrap is used the problem is compounded because $PuO_2$ is inherently poorly sinterable, and therefore an even smaller portion of "dead burnt" recycled fuel pellets can be accommodated in making new pellets.

Attempts have been made to treat nuclear fuel scrap in fluidized beds. One proposed process involved two beds, one for oxidation and one for reduction, each bed using a distributor plate. The process, however, was unsuccessful due to loss of fluidization within the reactor and the inability to transfer the scrap from one fluidized bed to the other without plugging lines.

U.S. Patent 3 578 419 shows a method of re-processing $UO_2$ using an oxidation-reduction cycle in a fluidized bed reactor maintained at 426°C to 705°C, using at least twice the oxygen stoichiometrically needed to oxidize $UO_2$ to $U_3O_8$.

U.S. Patent 3 294 493 shows a method for reprocessing $UO_2$ in a fluidized bed reactor at 400 to 450°C, using a concentration of oxygen and nitrogen of about 20 to about 50%.

U.S. Patent 3 140 151 shows a method for reprocessing $UO_2$ using a number of oxidation-reduction cycles. In the oxidation step the bed is maintained at 375°C and air is used as the oxidizing medium at a reduced pressure.

U.S. Patent 3 343 926 describes a method of reducing the particle size of $UO_2$ which may occur directly in the fluidized bed during uranium dioxide production. The oxidation is accomplished with about 20% to 30% of the amount of oxidizing agent necessary for a complete oxidation $UO_2$ to $U_3O_8$.

French Patent 1 315 822 describes a method of reducing the particle size of $UO_2$ powder in which the oxidation step is accomplished in an air atmosphere with a temperature in the region of 400°C.

It is the principal object of the present invention to provide a method for treating nuclear fuel scrap which can increase the activity of the scrap to such an extent that all of it can be sintered into fuel pellets of the required density.

With this object in view, the present invention resides in a method of treating nuclear $UO_2$ fuel scrap wherein said scrap is introduced in a fluidizing reactor where it is uniformly fluidized with a gas, and wherein said scrap is first oxidized in an oxidizing gas and is then reduced to form a material of greater surface activity which improves sinterability, characterized in that said scrap is oxidized with oxygen at a given temperature of less than 400°C wherein the amount of oxygen in said oxidizing gas said into the reactor is controlled by the temperature of the reactor so as to decrease the amount of oxygen as the temperature limit and to increase the amount of oxygen as the temperature approaches a lower limit so as to obtain said given temperature.

It is also advantageous that the process according to the invention is a dry process involving no liquids.

The invention will become more readily apparent from the following description of a preferred embodiment thereof shown, by way of example only, in the accompanying drawings which is a diagrammatic side view of the apparatus of this invention.

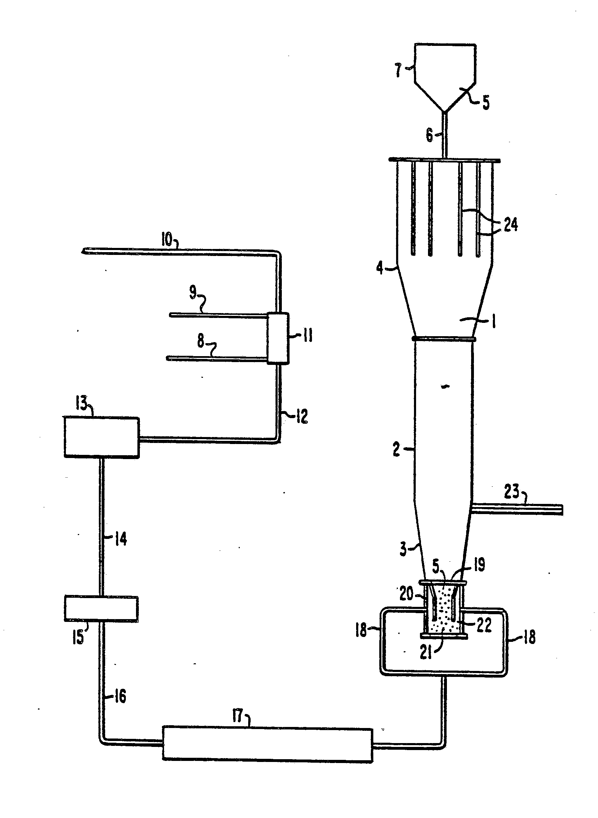

As shown in the drawing a fluidized bed reactor 1 consists of a cylindrical column 2 having a conical lower portion 3 and an enlarged upper portion 4. Nuclear fuel scrap 5 is admitted to the reactor 1 through line 6 from scrap charging can 7. Air, hydrogen and an inert carrier gas from lines 8, 9, and 10, respectively, can be mixed in mixer 11 to give mixtures of air and carrier gas or hydrogen and carrier gas. The carrier gas is preferably nitrogen, as it is inexpensive, but helium, argon, or another inert gas could also be used. The mixture passes through line 12 to surge tank 13 which pulses the gas. The pulsed gas passes through line 14 to pulsed valve 15, then through line 16 to pre-heater 17. Line 18 is divided and attaches to gas inlet assembly 19 at both sides. In the gas inlet assembly 19 the gas initially passes through porous plate 20 partially fluidizing scrap 5. The partial fluidization relieves the weight on the powder 21 at the bottom of the column permitting the gas to push it up the column with the remaining scrap through passage 22. A conduit 23 in the side of the reactor can be used for pneumatically removing product. Off gases produced by the reaction pass through filters 24 and out the top of the reactor.

The nuclear fuel fabrication scrap used in this invention includes rejected pellets, chips from pellets, grinder dust, green (unsintered) scrap, and rejected virgin powder. The scrap can come from light water reactors, which consists almost entirely of $UO_2$, or it can come from fast breeder fuel and consist of a mixture of $UO_2$ and $PuO_2$ containing up to about 15% $PuO_2$. Physically the scrap is in the form of small grains up to about 9.5 mm (3/8") in diameter.

The process of this invention consists of passing the scrap through one or more oxidation-reduction cycles. Oxidation of $UO_2$ to $U_3O_8$ increases surface area because $U_3O_8$ is a less dense material and its formation fractures the crystal structure and reduces particle size. In performing the process of this invention the reactor can either be filled with scrap or the scrap can be simultaneously gradually added and gradually withdrawn, a process known as trickle feed. It is preferable to fill the reactor with the scrap unless the scrap is green in which case a trickle feed is preferred because green scrap is very active and the presence of a large quantity might result in overheating.

In the first oxidation step a mixture of oxygen and nitrogen heated to about 300 to about 400°C is admitted to the reactor which is also heated to within the same temperature range. If green scrap is being treated, the mole percent of oxygen in the gas mixture should be at least about 5 as less oxygen requires too long a time, but should not exceed about 15 as too much oxygen will result in a thermal excursion- -a hot spot and dead burnt scrap. If hard (sintered) scrap is being treated air can be used as the gas mixture. In all the oxidizing steps it is preferable to use a cascade technique, where the amount of oxygen fed to the reactor is controlled by the temperature of the reactor. That is, as the temperature approaches the upper temperature limit the amount of oxygen in the feed is reduced and as the temperature approaches the lower limit the amount of oxygen in the feed is increased. Cascading can be performed automatically by techniques well known in the art. The oxidation step is complete when an analysis of the off gases indicates that no more oxygen is being removed by reaction with the $UO_2$.

In the reduction step the gas mixture is switched to a mixture of hydrogen and nitrogen. If the fuel fabrication scrap being treated is a mixture of $UO_2$ and $PuO_2$, the gas mixture should be about 4 to about 6% hydrogen, but if the scrap is all $UO_2$, the gas mixture may be about 15 to about 20% hydrogen. In the reduction step the gas mixture and the furnace are heated to about 400 to about 700°C. While the oxidation step is exothermic and the reaction itself provides much of the heat once it has begun, the reduction step is endothermic and heat must be supplied to the reaction.

In both the oxidation and reduction step the fluidizing gases are preferably pulsed. The preferred pulse parameters are a frequency of about 0.2 to about 2 Hz., a pressure of about 0.5 to about 3 bar (gauge), an on cycle of about 0.1 to about 1 second, and an off cycle of about 0.4 to about 4 seconds.

The activity of the scrap can be increased by repeating the oxidation-reduction cycle. If the scrap consists of $UO_2$ usually one cycle is sufficient, but if the scrap consists of mixed $UO_2$—$PuO_2$ usually two cycles will be required. Also, if the amount of scrap being recycled is up to 40% usually one cycle will be sufficient, but if more than 40% of the scrap is being recycled additional cycles are usually required. If an additional oxidation-reduction cycle is to be performed, the furnace should be cooled with nitrogen to about 250 to about 500°C before beginning the second oxidation step. Also, in the second oxidation step the upper limit on temperature should be reduced somewhat to avoid producing dead burnt material. On each subsequent oxidation step the upper temperature limit should be further reduced as the scrap oxidizes more rapidly as it becomes more active.

The scrap is removed from the reactor, for example, pneumatically through passage 22 as shown in the drawing. The processed scrap can then be pressed and sintered into pellets by techniques well known in the art.

The following example further illustrate this invention.

Example

Demonstration runs were conducted using $UO_2$ nuclear fuel fabrication scrap in an apparatus similar to that shown in the accompanying drawing. The following table gives the conditions and the results:

| Run Description | Feed Material | Pulse characteristics* | | | | Elapsed time, min. and temperature °C | | | | Avg. transfer rate Kg/min | Product | | | | Remarks |
|---|---|---|---|---|---|---|---|---|---|---|---|---|---|---|---|
| | | 1st Oxid. | 1st Red. | 2nd Oxid | 2nd Red. | I | II | III | IV | | O/U | BET | F.S.S. APD | MP | |
| Single Cycle Oxid/Red (O/R) | 25.5 Kgs $UO_2$—$U_3O_8$ Powder | Good | Good | — | — | 210/450 | 245/650 | | | 0.78 | 2.04 | 2.41 | 9.0 | 0.60 | Full bed was charged initially before heat up (powder). |
| Single Cycle (O/R) | $UO_2$ Chips | Good | Fair | — | — | 160/400 | 140/650 | | | 0.80 | 2.06 | 1.50 | 1.70 | 0.52 | |
| Single Cycle (O/R) | $UO_2$ Chips | Good | Fair | — | — | 150/375 | 120/625 | | | 0.95 | 2.01 | 1.56 | 1.39 | 0.58 | |
| Two Cycles (O/R/O) | $UO_2$ Chips | Good | Fair | Good | — | 120/375 | 120/625 | 90/350 | | 1.24 | 2.70 | 2.55 | 0.62 | 0.72 | |
| Two Cycles (O/R/O/R) | $UO_2$ Chips | Good | Fair | Good | Fair | 180/375 | 120/625 | 90/350 | 90/625 | 0.82 | 2.08 | 2.21 | 1.21 | 0.66 | |
| Single Cycle (O/R) | $UO_2$ Chips | Good | Fair | — | — | 160/375 | 90/625 | | | 0.78 | 2.14 | 1.68 | 1.65 | 0.58 | |
| Three Cycles (O/R/O/R/O/R) | $UO_2$ Chips | — | — | — | — | | | | | — | — | — | — | — | Run was aborted due to the feed line being clogged. |
| Single Cycle (O) | $UO_2$ Chips | Good | — | — | — | 160/350 | | | | 1.24 | 2.66 | 2.0 | 1.0 | 0.65 | |
| Single Cycle (O/R) | ADU Green Chips | Good | Good | — | — | 145/350 | 85/625 | | | 0.86 | 2.05 | 2.87 | 0.9 | 0.68 | |
| Two Cycles (O/R/O/R) | $UO_2$ Chips | Good | Poor | Fair | Poor | 105/350 | 92/625 | 60/350 | 90/625 | 0.21 | 2.28 | 2.15 | 1.05 | 0.60 | External cooling of reactor by $H_2$ was tried without success. |
| Two Cycles (O/R/O/R) | $UO_2$ Chips | Good | Fair | Good | Fair | 110/350 | 90/625 | 65/350 | 100/625 | 0.87 | 2.09 | 2.03 | 1.02 | 0.61 | |
| Two Cycles (O/R/O/R) | DCFB Green Chips | Good | Poor | Fair | Poor | 130/350 | 90/625 | 65/350 | 105/625 | 0.94 | 2.15 | 2.61 | 1.00 | 0.61 | Cone heater elements partially burned out. |
| Two Cycles (O/R/O/R) | $UO_2$ Chips | Good | Poor | Fair | Poor | 110/350 | 95/625 | 70/350 | 110/625 | 0.68 | 2.25 | 2.00 | 1.05 | 0.58 | Repaired cone heater after product transfer. |
| Three Cycles (O/R/O/R/O/R) | $UO_2$ Chips | Good | Fair | Good | Fair | 150/350 | 100/625 | 90/350 | 90/625 | 0.59 | 2.13 | 2.05 | 1.02 | 0.56 | |

*Good—No vibration required.
Fair—Intermittent vibration required.
Poor—Vibration required.

The above table shows that the process of this invention successfully activated the $UO_2$ to a sinterable condition.

Claims

1. A method of treating nuclear UO₂ fuel scrap wherein said scrap is introduced in a fluidizing reactor where it is uniformly fluidized with a gas, and wherein said scrap is first oxidized in an oxidizing gas and is then reduced to form a material of greater surface activity which improves sinterability, characterized in that said scrap is oxidized with oxygen at a given temperature of less than 400°C wherein the amount of oxygen in said oxidizing gas fed into the reactor is controlled by the temperature of the reactor so as to decrease the amount of oxygen as the temperature approaches an upper temperature limit and to increase the amount of oxygen as the temperature approaches a lower limit so as to obtain said given temperature.

2. A method according to claim 1, characterized in that said fluidizing gas is pulsed.

3. A method according to Claim 2, characterized in that said gas pulses have a frequency of about 0.2 to about 2 Hz., a pressure of about 0.5 to about 3 bar, an on-cycle of about 0.1 to about 1 second, and an off-cycle of about 0.4 to about 4 seconds.

4. A method according to any of claims 1 to 3, characterized in that the oxidizing and reducing steps are repeated at least once.

5. A method according to any of claims 1 to 4, characterized in that the fluidizing gas contains nitrogen.

6. A method according to any of claims 1 to 5, characterized in that said scrap is reduced at about 400°C to 700°C.

Patentansprüche

1. Verfahren zur Behandlung von UO₂-Kernbrennstoffabfall, wobei der Abfall in einen Fließbettreaktor, in welchem er mit einem Gas gleichförmig fluidisiert wird, eingebracht und zuerst in einem oxidierenden Gas oxidiert und dann zur Bildung eines Materials mit größerer Oberflächenaktivität reduziert wird, das die Sinterfähigkeit verbessert, dadurch gekennzeichnet, daß der Abfall mit Sauerstoff bei einer gegebenen Temperatur von weniger als 400°C oxidiert wird, wobei die Menge des Sauerstoffs in dem in den Reaktor zugeführten oxidierenden Gas durch die Temperatur des Reaktors derart gesteuert wird, daß die Sauerstoffmenge verringert wird, wenn die Temperatur sich einer oberen Temperaturgrenze nähert, und die Sauerstoffmenge erhöht wird, wenn die Temperatur sich einer unteren Grenze nähert, derart, daß man die genannte gegebene Temperatur erhält.

2. Verfahren nach Anspruch 1, dadurch gekennzeichnet, daß das fluidisierende Gas pulsierend zugeführt wird.

3. Verfahren nach Anspruch 2, dadurch gekennzeichnet, daß die Gasimpulse eine Frequenz von etwa 0,2 Hz bis etwa 2 Hz, einen Druck von etwa 0,5 bar bis etwa 3 bar, eine Impulsbreite von etwa 0,1 s bis etwa 1 f und eine Impulslücke von etwa 0,4 s bis etwa 4 s haben.

4. Verfahren nach einem der Ansprüche 1 bis 3, dadurch gekennzeichnet, daß der Oxidations- und der Reduktionsvorgang mindestens einmal wiederholt werden.

5. Verfahren nach einem der Ansprüche 1 bis 4, dadurch gekennzeichnet, daß das fluidisierende Gas Stickstoff enthält.

6. Verfahren nach einem der Ansprüche 1 bis 5, dadurch gekennzeichnet, daß der Abfall bei etwa 400°C bis 700°C reduziert wird.

Revendications

1. Procédé de traitement de déchets de combustible nucléaire en UO₂ dans lequel les déchets sont introduits dans un réacteur fluidisant où ils sont uniformément fluidisés avec un gaz, et dans lequel les déchets sont d'abord oxydés dans un gaz oxydant, puis réduits pour former une matière à plus grande activité surfacique qui améliore la frittabilité, caractérisé en ce que les déchets sont oxydés avec de l'oxygène à une température donnée inférieure à 400°C où la quantité d'oxygène dans le gaz oxydant introduit dans le réacteur est commandée par la température du réacteur afin de réduire la quantité d'oxygène lorsque la température approche d'une limite supérieure de température et d'accroître la quantité d'oxygène lorsque la température approche d'une limite inférieure afin d'obtenir ladite température donnée.

2. Procédé selon la revendication 1, caractérisé en ce que le gaz fluidisant est pulsé.

3. Procédé selon la revendication 2, caractérisé en ce que les impulsions de gaz ont une fréquence d'environ 0,2 à environ 2 Hz, une pression d'environ 0,5 à environ 3 bars, un cycle de démarrage d'environ 0,1 à environ 1 seconde et un cycle d'arrête environ 0,4 à environ 4 secondes.

4. Procédé selon l'une quelconque des revendications 1 à 3, caractérisé en ce que les opérations d'oxydation et de réduction sont répétées au moins une fois.

5. Procédé selon l'une quelconque des revendications 1 à 4, caractérisé en ce que le gaz fluidisant contient de l'azote.

6. Procédé selon l'une quelconque des revendications 1 à 5, caractérisé en ce que les déchets sont réduits entre environ 400°C et 700°C.

5